# EUROPÄISCHE PATENTSCHRIFT

(11) **EP 1 079 915 B1**
(45) Veröffentlichungstag und Bekanntmachung des Hinweises auf die Patenterteilung: **13.10.2004**
(21) Anmeldenummer: 00903655.9
(22) Anmeldetag: 31.01.2000
(51) Int. Cl.: B01J 8/12, F23G 7/00, F23G 5/00, F42B 33/06

(54) **VERFAHREN ZUR ENTSORGUNG GEFÄHRLICHER ODER HOCHENERGETISCHER MATERIALIEN SOWIE VORRICHTUNG ZUR DURCHFÜHRUNG DIESES VERFAHRENS**
METHOD FOR DISPOSING OF HAZARDOUS AND HIGH-ENERGY MATERIALS AND DEVICE FOR CARRYING OUT SAID METHOD
PROCEDE POUR ELIMINER DES MATIERES DANGEREUSES OU A HAUTE ENERGIE, ET DISPOSITIF POUR METTRE EN OEUVRE LEDIT PROCEDE

(30) Priorität: 12.03.1999 DE 19911175
(43) Veröffentlichungstag der Anmeldung: 07.03.2001
(73) Patentinhaber: EISENMANN MASCHINENBAU KG (Komplementär: EISENMANN-Stiftung), 71002 Böblingen (DE)
(72) Erfinder: MAROLD, Freimut, D-71093 Weil im Schönbuch (DE); WILHELM, Friedrich, D-71116 Gärtingen (DE)
(74) Vertreter: Ostertag, Ulrich, Dr.
(86) Internationale Anmeldenummer: PCT/EP2000/000725
(87) Internationale Veröffentlichungsnummer: WO 2000/054878

(56) Entgegenhaltungen:
- WO-A-98/46943
- DE-C- 19 521 204
- DE-C- 19 606 945
- US-A- 4 574 714
- US-A- 5 582 119

## Beschreibung

Die Erfindung betrifft ein Verfahren zur Entsorgung gefährlicher oder hochenergetischer Materialien, bei dem diese in einem druckfesten Gehäuse unter kontrollierten Bedingungen zur einer Reaktion gebracht werden, deren Endprodukte ungefährlich sind,
sowie
eine Vorrichtung zur Entsorgung gefährlicher oder hochenergetischer Materialien mit einem druckfesten Gehäuse, in dem die Materialien unter kontrollierten Bedingungen zu einer Reaktion gebracht werden können, deren Endprodukte ungefährlich sind.

Zu den "gefährlichen oder hochenergetischen" Materialien, deren Entsorgung sich die vorliegende Erfindung zum Ziel gesetzt hat, zählen insbesondere Sprengstoffe oder Munition, bei deren kontrollierter Sprengung große Mengen mechanischer und thermischer Energie frei werden. Die Erfindung eignet sich aber darüber hinaus auch zur Entsorgung anderer gefährlicher Substanzen, die mit bestimmten Chemikalien sowohl in exothermen als auch endothermen Reaktionen zu den gewünschten ungefährlich Endprodukten umgesetzt werden müssen.

Zur Entsorgung von Sprengstoffen oder Explosivstoffen ist es bekannt, diese in ein druckfestes Gehäuse einzubringen und dort kontrolliert zur Detonation zu bringen. Ein Beispiel hierfür findet sich in der WO 97/43594 A1. Nachteilig bei diesen bekannten Vorrichtungen bzw. Verfahren ist, daß die Entsorgung nur chargenweise stattfinden kann und der Ablauf der Reaktion schwer steuerbar ist.

In der US-A-5582119 werden ein Verfahren und eine Vorrichtung zur Behandlung explosiver Abfallstoffe beschrieben, bei dem die Abfallstoffe durch einen leeren oberen Bereich des Gehäuses der Vorrichtung auf ein Sandbett fallen, das sich bereits auf Reaktionstemperatur befindet, sodaß die Abfallstoffe sofort beim Auftreffen auf das Sandbett explodieren.

Aufgabe der vorliegenden Erfindung ist es, ein Verfahren der eingangs genannten Art so fortzubilden, daß ein kontinuierlicher Betrieb möglich und der Ablauf der Reaktion gut kontrollierbar ist.

Diese Aufgabe wird erfindungsgemäß dadurch gelöst, daß die zu entsorgenden Materialien mit einem Schüttgut vermischt werden, mit dem zusammen sie ein Wanderbett bilden, wobei die Reaktion in einem gewissen Abstand von der Oberfläche im Inneren des Wanderbettes eingeleitet wird, wie in den vorliegenden Ansprüchen 1-10 angegeben wird.

Erfindungsgemäß werden also die zu entsorgenden Materialien gemeinsam mit dem Schüttgut in das druckfeste Gehäuse eingegeben, in dem sich im dynamischen Gleichgewicht ein Wanderbett ausbildet. Dieses behält zwar seine äußerlich erkennbare Gestalt im wesentlichen kontinuierlich bei; die nähere Betrachtung zeigt dabei jedoch, daß die Materialien, aus denen sich das Wanderbett bildet, kontinuierlich in Bewegung sind. Auf diese Weise lassen sich die zu entsorgenden Materialien zunächst in eine gewisse Tiefe des Wanderbettes hinein bewegen, wo sie dann zur Reaktion gebracht werden. Das umgebende Wanderbett nimmt dabei frei werdende Energie sowohl in mechanischer als auch in thermischer Form auf. Das Wanderbett bietet - wo dies gewünscht wird - große Oberflächen, an denen eine Reaktion ablaufen kann. Schließlich stellt das Wanderbett auch einen Wärmespeicher dar, der überall dort, wo die zu entsorgenden Materialien auf eine Reaktionstemperatur gebracht werden müssen, für Energieeinsparungen sorgen kann. Schüttgut und zu entsorgende Materialien können dem Wanderbett in vermischtem Zustand zugeführt werden oder getrennt auf das Wanderbett "aufgestreut" werden, so daß sich die Mischung erst innerhalb des Wanderbettes bildet.

Wenn als Schüttgut Kugeln verwendet werden, so ist die erforderliche innere Beweglichkeit des Wanderbettes besonders gut gewährleistet. Abweichungen von der Kugelform sind jedoch möglich, sofern nur die Eigenreibung des Schüttgutes nicht so groß wird, daß die innere Beweglichkeit des Wanderbettes gefährdet ist.

Die Kugeln bestehen vorzugsweise aus Stahl oder Keramik. Beide Materialien haben die erforderliche Festigkeit zur Aufnahme mechanischer oder thermischer Energie und sind im allgemeinen gegen die zu entsorgenden Materialien resistent.

In sehr vielen Fällen wird die Entsorgungsreaktion erst bei einer bestimmten Temperatur eingeleitet. Im günstigsten Fall läßt sich ohne Zuhilfenahme externer Energie ausschließlich mit Hilfe der Reaktionswärme in dem Wanderbett ein Temperaturprofil einstellen, bei dem die Reaktionstemperatur in einem gewissen Abstand von der Oberfläche im Inneren des Wanderbettes erreicht wird.

Sind jedoch die zu entsorgenden Materialien nicht ausreichend energiehaltig, um die Reaktionstemperatur zu erreichen, muß externe Wärme zugeführt werden. Dies kann im einfachsten Fall durch Zufuhr von Brennstoffen oder sonstigen verlorenen Zündhilfen erfolgen. Alternativ kann diese zum Erreichen der Reaktionstemperatur erforderliche Wärmezufuhr auch über einen Lichtbogen oder induktiv geschehen. Im letzteren Falle muß das Wanderbett elektrisch leitfähige Materialien enthalten, z.B. Stahlkugeln als Schüttgut.

Besonders vorteilhaft ist diejenige Ausgestaltung des erfindungsgemäßen Verfahrens, bei welcher das Schüttgut aus der aus dem Wanderbett austretenden Materialmischung abgeschieden und zumindest teilweise wieder dem Eingang des Wanderbettes zugeführt wird. So läßt sich der Verbrauch des Schüttgutes gering halten.

Dem Wanderbett können zur Durchführung des Verfahrens notwendige oder dieses fördernde Hilfsstoffe zugeführt werden. Dabei ist insbesondere an Brennstoffe gedacht, welche die Temperatur des Wanderbettes erhöhen, an Luft, welche insbesondere der Zufuhr von Sauerstoff dient, an Temperiergas, mit dem insbesondere im Bereich der freien Oberfläche des Wanderbettes eine Vortemperierung erfolgen kann, an Chemikalien, mit denen die zu entsorgenden Materialien umgesetzt werden sollen, sowie an Chemisorbentien, welche bestimmte Reaktionsprodukte an sich binden.

Aufgabe der vorliegenden Erfindung ist es ferner, eine Vorrichtung der eingangs genannten Art so auszugestalten, daß sie kontinuierlich betrieben und die Entsorgungsreaktion gut kontrolliert werden kann.

Diese Aufgabe wird erfindungsgemäß dadurch gelöst, daß in dem Gehäuse ein sich von oben nach unten bewegendes Wanderbett im dynamischen Gleichgewicht zwischen der Zufuhr eines Schüttgutes und den zu entsorgenden Materialien einerseits und dem Austrag einer Mischung aus Schüttgut und der Reaktion entstammenden Reststoffen andererseits ausgebildet ist,
wobei eine Einrichtung vorgesehen ist, welche dafür sorgt, daß die Reaktion erst in einem gewissen Abstand von der Oberfläche im Inneren des Wanderbettes eingeleitet wird, wie im vorliegenden Anspruch 11 dargelegt ist.

Die Vorteile, die mit einer derartigen Vorrichtung gegenüber solchen nach dem Stande der Technik erzielbar sind, entsprechen sinngemäß den oben erläuterten Vorteilen des erfindungsgemäßen Verfahrens. Gleiches gilt für die Vorteile der Ausführungsformen der erfindungsgemäßen Vorrichtung, die in den Ansprüchen 11 bis 17 dargelegt sind.

Besonders erwähnenswert an dieser Stelle ist die Ausführungsform der erfindungsgemäßen Vorrichtung nach Anspruch 19, bei welcher die Wand des Gehäuses von außen nach innen folgende Schichten umfaßt:
a) einen Druckmantel;
b) eine schallabsorbierende Schicht;
c) eine elastische Schicht;
d) eine von der elastischen Schicht abgestützte verformbare Schale aus verschleißfestem Material.

Dieser Wandaufbau hat sich zur Bewältigung der komplexen Aufgaben, welche die Wand insbesondere im Blick auf die Aufnahme thermischer und mechanischer Energie sowie die Schalldämmung von Geräuschen bewältigen muß, besonders bewährt.

Die schalldämmende Schicht kann dabei aus Sand oder Holz, die elastische Schicht aus einem Elastomer oder einem komprimierten Fluid bestehen.

Günstig ist, wenn Temperierkanäle durch die elastische Schicht hindurchgeführt sind. Durch ein geeignetes, diese Temperierkanäle durchströmendes Medium läßt sich nicht nur Reaktionswärme abführen sondern generell durch Kühlung oder Erwärmung ein bestimmtes Temperaturprofil im Wanderbett in Durchströmungsrichtung einstellen. Bei heißem Betrieb kann die innere Schale zusätzlich gekühlt werden, sodaß die höhere Zähigkeit und Festigkeit des Materials bei niedrigeren Temperaturen genutzt werden kann.

Die verschleißfeste (innere) Schale der Wand ist vorzugsweise mit Einrichtungen versehen, welche eine elastische Durchmesserveränderung der Schale ermöglichen. Die verschleißfeste Schale kann dann zur Absorption von Druckstössen "atmen" und auf diese Weise die mechanische Energie gut an die elastische Schicht abgeben, von der sie abgestützt ist.

Ein Ausführungsbeispiel der Erfindung wird nachfolgend anhand der Zeichnung näher erläutert; es zeigen
- Figur 1:: einen vertikalen Schnitt durch einen Schachtofen zur Entsorgung von Munition oder Sprengstoffen;
- Figur 2:: einen horizontalen Schnitt durch einen Bereich der Wandstruktur des Schachtofens von Figur 1.

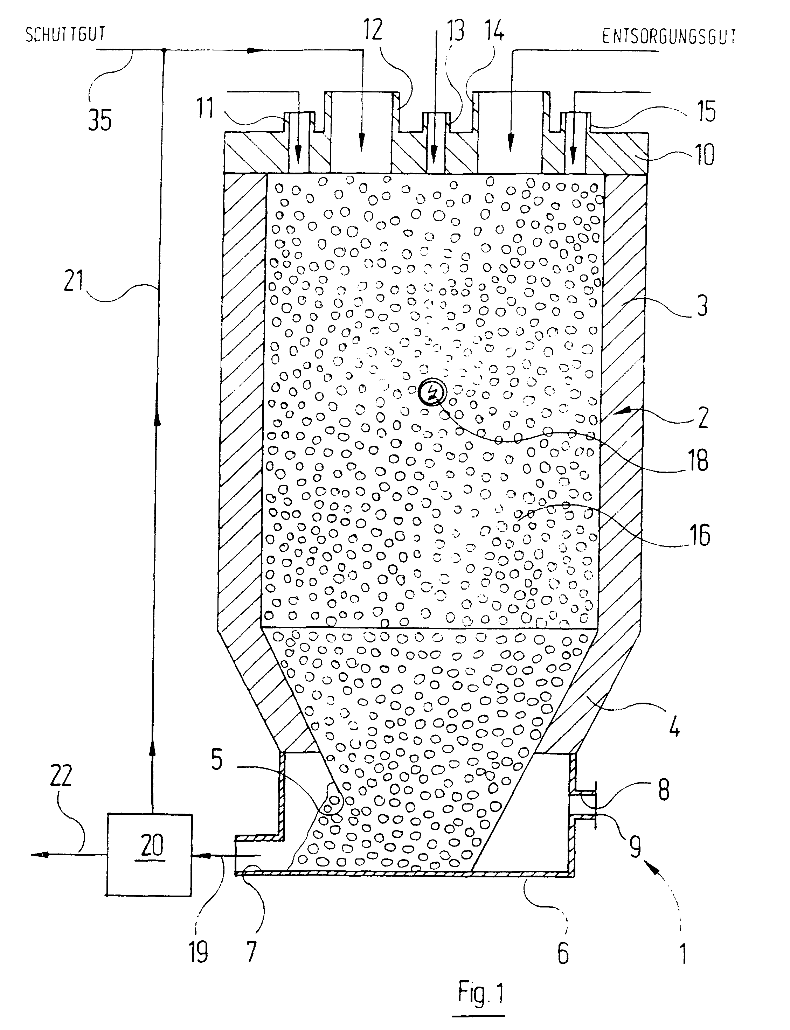

Der in Figur 1 im Vertikalschnitt dargestellte und insgesamt mit dem Bezugszeichen 1 versehene Schachtofen dient der Entsorgung von Munition oder anderen Sprengstoffen, läßt sich aber in ähnlicher Ausführung zur Entsorgung allgemein gefährlicher oder hochenergetischer Materialien einsetzen. Er umfaßt ein Gehäuse 2 mit einem oberen, im wesentlichen zylindrischen Abschnitt 3 und einem unteren, sich nach unten konisch verjüngenden Austragabschnitt 4. Der Austragabschnitt 4 besitzt eine Auslaßöffnung 5, über welche der Innenraum des Austragabschnittes 4 mit dem Innenraum eines Austrag-Sammelgehäuses 6 kommuniziert. In der Nähe des Bodens des Austrag-Sammelgehäuses 6 befindet sich eine Austragöffnung 7; in etwas größerem Abstand vom Boden des Austrag-Sammelgehäuses 6 ist eine Gaseinlaß- und Auslaßöffnung 8 vorgesehen. Diese ist in Figur 1 durch einen Flansch 9 verschlossen.

Auf den zylindrischen Abschnitt 3 des Gehäuses 2 ist ein deckelartiges Gehäuseoberteil 10 aufgesetzt, in dem sich verschiedene Einlaßöffnungen 11, 12, 13, 14 und 15 befinden.

Über die Einlaßöffnung 12 wird dem Innenraum des Gehäuses 2 in noch näher zu beschreibender Weise Schüttgut in Form von Stahlkugeln zugeführt, welche im betriebsbereiten Zustand des Schachtofens 1 in der in Figur 1 dargestellten Weise einen Teil des Austrag-Sammelgehäuses 6, den gesamten konischen Austragabschnitt 4 und den gesamten zylindrischen Abschnitt 3 des Gehäuses 2 ausfüllt. Die Stahlkugeln sind dabei so dimensioniert, daß sie innerhalb des Gehäuses 2 eine "fließfähige" Schüttung nach Art eines Wandbettes 16 bilden.

In einem gewissen Abstand unterhalb der der Einlaßöffnung 12 benachbarten Oberfläche des Wanderbettes 16 ist eine Zündvorrichtung 18, beispielsweise in Gestalt zweier einen Lichtbogen erzeugender Elektroden, vorgesehen.

Über die Einlaßöffnung 14 im Gehäuseoberteil 10 wird die zu entsorgende Munition zugeführt. Diese vermischt sich dabei mit den über die Einlaßöffnung 12 eingeleiteten Stahlkugeln und bewegt sich gemeinsam mit diesen, in das Wanderbett 16 integriert, innerhalb des Schachtofens 1 nach unten, wie weiter unten noch deutlicher wird.

Über die im Durchmesser kleiner dargestellten Einlaßöffnungen 11, 13 und 15 im Gehäuseoberteil 10 können nach Bedarf Hilfsstoffe ins Innere des Gehäuses 2 eingeführt werden, so etwa Wasser, Brennstoffe, Luft, Heißgas, Kühlungsgas und Chemikalien, insbesondere Chemisorbentien, je nach Art der Materialen, die in dem Schachtofen 1 entsorgt werden sollen. Nicht benötigte Einlaßöffnungen 11, 13, 15, werden selbstverständlich im Betrieb des Schachtofens verschlossen.

Die Austragöffnung 7 des Austrag-Sammelgehäuses 6 ist über eine Leitung 19 und eine Schüttgut-Abscheideeinrichtung 20 sowie eine weitere Leitung 22 mit einer in der Zeichnung nicht mehr dargestellten Austrageinrichtung verbunden. Diese zieht über die Leitung 19 das sich im Austrag-Sammelbehälter 6 befindliche Material ab, welches eine Mischung aus den als Schüttgut verwendeten Stahlkugeln und dem Schrott und sonstigen Reststoffen ist, die bei der Reaktion des Entsorgungsgutes entstehen. Dabei wird gleichzeitig der gesamte Innenraum des Gehäuses 2 beispielsweise durch Absaugung über die Gaseinlaß- und Auslaßöffnung 8 unter Unterdruck gehalten, sodaß keine Gase aus dem Gehäuse 2 entweichen können.

In der Schüttgut-Abscheideeinrichtung 20 wird das Schüttgut von den sonstigen Reststoffen, insbesondere dem Schrott getrennt. Das Schüttgut wird über eine weitere Leitung 21 dem Einlaß 12 im Gehäuseoberteil 10 wieder zugeführt, während der Schrott und die sonstigen aus der Reaktion stammenden festen Reststoffe über die Leitung 22 der endgültigen Entsorgung gefahrlos zugeführt werden können.

Der oben beschriebene Schachtofen 1 arbeitet wie folgt:

Durch die kontinuierliche Zufuhr von Stahlkugeln über die Einlaßöffnung 12 im Gehäuseoberteil 10 und die im gleichen Maße stattfindende Entnahme von Stahlkugeln über die Austragöffnung 7 im Austrag-Sammelgehäuse 6 sowie durch die Rückführung der in der Schüttgut-Abscheideeinrichtung 20 wiedergewonnenen Stahlkugeln über die Leitung 21 wird ein kontinuierlicher Kreislauf der Stahlkugeln aufrechterhalten. Über die Leitung 35 wird von außen nur jeweils der Ergänzungsbedarf frischer Stahlkugeln eingebracht. Im Inneren des Reaktors bildet sich das in Figur 1 dargestellte Wanderbett 16 aus, welches im dynamischen Gleichgewicht von Zufluß und Abfluß etwa die dargestellte Form behält. Die zu entsorgenden Güter, im Beispiel die Munition, werden in einer entsprechend abgestimmten Menge über die Einlaßöffnung 14 im Gehäuseoberteil 10 zugeführt und dabei unter die Stahlkugeln gemischt. In der Nähe der Einlaßöffnungen 12 und 14 besitzt das Wanderbett 16 eine Temperatur, die unterhalb der Zündtemperatur der Munition liegt. Je tiefer jedoch die Munition mit den Stahlkugeln im Wanderbett 16 nach unten absinkt, um so höher wird die Temperatur, der sie ausgesetzt ist. Kommt die Munition in die Nähe der Zündvorrichtung 18, so hat sie bereits eine Temperatur, die nicht mehr weit von der Zündtemperatur entfernt ist. Es genügt nunmehr eine verhältnismäßig kleine weitere Temperaturerhöhung durch die Zündvorrichtung 18, um die gesteuerte Explosion auszulösen. Die dabei freigesetzte thermische und mechanische Energie wird von den die Munition umgebenden Stahlkugeln aufgenommen und zum Teil an die Wände des Gehäuses 2 weitergegeben, die hierzu in einer bestimmten, weiter unter näher erläuterten Weise ausgebildet sind. Die mit der Explosion verbundenen und ggf. nachfolgenden Reaktionen sind abgeschlossen, wenn die das Wanderbett 16 bildenden Materialien in den unteren Austragabschnitt 4 des Gehäuses 2 eintreten. Hier enthält 'das Wanderbett 16 also im wesentlichen Stahlkugeln, Metallschrott, der bei der Explosion aus den metallischen Munitionsteilen entstanden ist, ungefährliche Chemikalien als Reaktionsprodukte und ggf. Gase. Diese Mischung wird über das Austrag-Sammelgehäuse 6 in der oben schon geschilderten Weise ausgetragen, wobei eventuell vorhandende Gase über die Gaseinlaß- und Auslaßöffnung 8 abgezogen werden.

Das Wanderbett 16 wirkt bei den oben geschilderten Vorgängen nicht nur druckstoßdämpfend; vielmehr dienen die über die Schüttgut-Abscheideeinrichtung 20 und die Leitung 21 rezirkulierten Stahlkugeln gleichzeitig als regenerativer Wärmetauscher bzw. Wärmespeicher. Dieser vermindert den Energiebedarf, der zur Erwärmung der Munition bis nahe an die Zündtemperatur erforderlich ist.

Die Schüttgut-Abscheideeinrichtung 20 kann unterschiedliche Bauweisen besitzen: Im oben geschilderten Fall, in dem das Schüttgut aus Stahlkugeln besteht und der in der Explosion entstandene Schrott im wesentlichen aus Eisen, kann sie magnetisch arbeiten.

Statt der Kugeln aus Stahl können als Schüttgut auch Kugeln aus anderem Material, insbesondere keramische Kugeln, eingesetzt werden. Auch eine exakte Kugelform ist nicht erforderlich; es reicht jede Form aus, die zu dem gewünschten "fließfähigen" Wanderbett 16 führt.

Wird als Material für das Schüttgut ein Metall verwendet, kann statt der mit einem Lichtbogen arbeitenden Zündvorrichtung 18 auch eine Induktionsspule eingesetzt werden. Diese ruft in dem Schüttgut wärmeerzeugende Wirbelströme hervor, die dann für die zur Reaktionseinleitung erforderliche Temperatur sorgen. Bei energiereichen Materialien kann unter Umständen auf eine gesonderte Zündvorrichtung vollständig verzichtet werden, da die zur Reaktionseinleitung erforderliche Temperatur ohne äußere Energiezufuhr aus der Reaktionswärme im Wanderbett 16 erreicht wird.

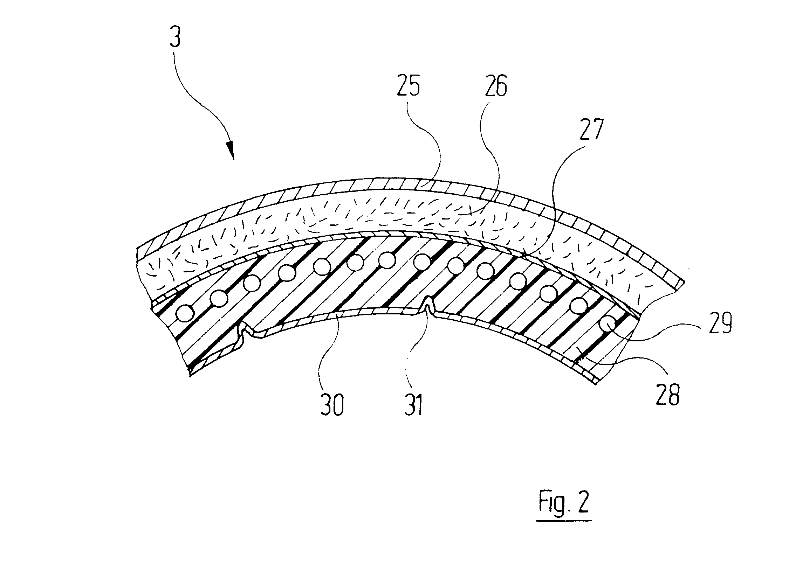

Wie schön oben erwähnt wurde, muß die Wand 3 des Gehäuses 2 erhebliche thermische und mechanische Belastungen aushalten; darüber hinaus können die im Wanderbett 16 stattfindenden Reaktionen mit einer erheblichen Geräuschentwicklung verbunden sein, so daß eine schalldämmende Eigenschaft der Wand erwünscht ist. Hierzu besitzt die Wand den in Figur 2 schematisch dargestellten Aufbau:

Radial innerhalb eines äußeren, herkömmlichen Druckmantels 25 aus Metall befindet sich eine schallabsorbierende Zwischenschicht 26, die z.B. aus Sand oder Holz bestehen kann. Die schallabsorbierende Zwischenschicht 26 ist über eine metallische Schale 27 von einer weiteren Zwischenschicht 28 getrennt, die aus einem elastischen Medium, im dargestellten Beispiel aus Gummi, besteht. Die elastische Zwischenschicht 28 wird durch eine Vielzahl achsparalleler Temperierbohrungen 29 durchzogen.

Durch diese Temperierbohrungen 29 wird je nach Bedarf ein Temperiermittel (Kühlmittel oder Heizmittel) geleitet, welches zur Aufrechterhaltung einer bestimmten Temperatur in einem bestimmten Abschnitt des Gehäuses 2 erforderlich ist.

Die radial am weitesten innenliegende Schicht der Wand ist eine verschleißfeste Schale 30, welche aufgrund ihrer Eigenelastizität verformbar ist und aufgrund von achsparallelen Sicken 31 in dem Sinne "atmen" kann, als sie unter dem Einfluß von inneren Druckstößen ihren Durchmesser verändern kann. Die verschleißfeste Schale 30 stützt sich dabei an der elastischen Zwischenschicht 28 ab, welche letztendlich die Deformationsenergie aufnimmt.

## Patentansprüche

1. Verfahren zur Entsorgung gefährlicher oder hochenergetischer bei Erreichen einer Zündtemperatur zündender Materialien, bei dem diese in einem druckfesten Gehäuse (2) in einem Schüttgut unter kontrollierten Bedingungen zu einer Reaktion gebracht werden, deren Reststoffe ungefährlich sind, mit folgenden Schritten:
a) kontinuierliches Zuführen von Schüttgut zu einem Einlaß (12) des Gehäuses (2);
b) Einbringen der Materialien in das Schüttgut;
c) Einleiten der Reaktion;
d) Austragen von Schüttgut und bei der Reaktion erhaltenen Reststoffen aus einem Auslaß (7) des Gehäuses (2) ;
**gekennzeichnet durch** folgende Verfahrensschritte:
e) Vermischen der Materialien mit dem Schüttgut bei einer unter der Zündtemperatur liegenden Temperatur;
f) kontinuierliches Austragen von Schüttgut und Reststoffen aus dem Auslaß (7) des Gehäuses (2) in gleichem Maße wie das Zuführen derart, daß im dynamischen Gleichgewicht zwischen Zufuhr und Austragen ein sich im Gehäuse (2) zum Auslaß (7) bewegendes Wanderbett (16) erhalten wird;
g) Fördern der Materialien und des Schüttgutes in Richtung auf den Auslaß (7) des Gehäuses (2) als gemeinsames Wanderbett (16); wobei
h) das Einleiten der Reaktion des Materiales im Inneren des Wanderbettes (16) dann erfolgt, wenn das Material **durch** Bewegen des Wanderbettes (16) eine Stelle erreicht hat, die von der einlaßseitigen Oberfläche des Wanderbettes (16) einen gewiessen Abstand aufweist.

2. Verfahren nach Anspruch 1, **dadurch gekennzeichnet,**
**daß** als Schüttgut Kugeln verwendet werden.

3. Verfahren nach Anspruch 2, **dadurch gekennzeichnet,**
**daß** die Kugeln aus Stahl bestehen.

4. Verfahren nach Anspruch 2, **dadurch gekennzeichnet,**
**daß** die Kugeln aus Keramik bestehen.

5. Verfahren nach einem der vorhergehenden Ansprüche,
**dadurch gekennzeichnet, daß** die Reaktion durch externe Wärmezufuhr eingeleitet wird.

6. Verfahren nach Anspruch 5, **dadurch gekennzeichnet,**
**daß** die externe Wärmezufuhr durch verlorene Zündhilfen erfolgt.

7. Verfahren nach Anspruch 5, **dadurch gekennzeichnet,**
**daß** die externe Wärmezufuhr durch einen Lichtbogen erfolgt.

8. Verfahren nach Anspruch 5, **dadurch gekennzeichnet,**
**daß** das Schüttgut elektrisch leitend ist und die Wärmezufuhr induktiv erfolgt.

9. Verfahren nach einem der vorhergehenden Ansprüche,
**dadurch gekennzeichnet, daß** das Schüttgut aus der aus dem Wanderbett (16) austretenden Materialmischung abgeschieden und zumindest teilweise wieder dem Eingang des Gehäuses (2) zugeführt wird.

10. Verfahren nach einem der vorhergehenden Ansprüche,
**dadurch gekennzeichnet, daß** dem Wanderbett Hilfsstoffe, insbesondere Brennstoffe, Luft, Temperiergas, Chemikalien, Chemisorbentien, zugeführt werden.

11. Vorrichtung zur Entsorgung gefährlicher oder hochenergetischer Materialien mit
a) einem druckfesten Gehäuse (2), in dem die Materialien unter kontrollierten Bedingungen zu einer Reaktion gebracht werden können, deren Reststoffe ungefährlich sind, welches
b) einen ersten Einlaß (12) zum Zuführen von Schüttgut, einen zweiten Einlaß (14) zum Zuführen der Materialien und einen Auslaß (7) zum Austragen von Schüttgut und von der Reaktion entstammenden Reststoffen aufweist,
c) Mitteln (21, 35) zum kontinuierlichen Zuführen von Schüttgut zum ersten Einlaß (12);
d) einer Einrichtung (18) zum Einleiten der Reaktion;
e) Mitteln (7) zum Austragen einer Mischung aus Schüttgut und Reststoffen;
**dadurch gekennzeichnet, daß**
f) daß sie ein sich zum Auslaß (7) bewegendes Wanderbett (16) umfaßt, welches dadurch erhalten wird, daß die Mittel zum Zuführen des Schüttgutes (21,35) und die Mittel zum Austragen der Mischung aus Schüttgut und bei der Reaktion erhaltenen Reststoffen (7) so ausgebildet sind, daß ein dynamisches Gleichgewicht zwischen der Zufuhr des Schüttgutes und den zu entsorgenden Materialien einerseits und dem Austragen der Mischung aus Schüttgut und bei der Reaktion erhaltenen Reststoffen andererseits gegeben ist;
g) die Einrichtung (18) zum Einleiten der Reaktion unterhalb der Oberfläche des Wanderbettes (16) angeordnet ist.

12. Vorrichtung nach Anspruch 11, **dadurch gekennzeichnet,**
**daß** unterhalb der Oberfläche des Wanderbetts (16) eine Zündvorrichtung (18) vorgesehen ist.

13. Vorrichtung nach Anspruch 12, **dadurch gekennzeichnet,**
**daß** die Zündvorrichtung (18) Elektroden umfaßt, zwischen denen ein Lichtbogen erzeugt werden kann.

14. Vorrichtung nach Anspruch 12, **dadurch gekennzeichnet,**
**daß** die Zündvorrichtung (18) eine Induktionsspule umfaßt, mit welcher das Wanderbett (16) induktiv erwärmt werden kann.

15. Vorrichtung nach Anspruch 11, **dadurch gekennzeichnet,**
**daß** eine Kühleinrichtung vorgesehen ist, mit welcher das Temperaturprofil im Wanderbett (16) in Durchströmungsrichtung einstellbar ist.

16. Vorrichtung nach einem der Ansprüche 11 bis 15,
**dadurch gekennzeichnet, daß** sie eine Schüttgut-Abscheideeinrichtung (20) umfaßt, der die das Wanderbett (16) verlassende Materialmischung zuführbar ist und aus dieser das Schüttgut abtrennt, wobei der Schüttgut-Auslaß dieser Schüttgut-Abscheideeinrichtung (20) mit dem Schüttgut-Einlaß (12) des Gehäuses (2) verbunden ist.

17. Vorrichtung nach einem der Ansprüche 11 bis 16,
**dadurch gekennzeichnet, daß** das Gehäuse (2) mindestens eine zusätzliche Einlaßöffnung (11, 13, 15) zur Zufuhr von Hilfsstoffen, insbesondere von Brennstoffen, Luft, Temperiergas, Chemikalien, Chemiesorbentien, aufweist.

18. Vorrichtung nach einem der Ansprüche 11 bis 17,
**dadurch gekennzeichnet, daß** eine Saugeinrichtung vorgesehen ist, welche das Innere des Gehäuses (2) unter Unterdruck hält.

19. Vorrichtung nach einem der Ansprüche 11 bis 18,
**dadurch gekennzeichnet, daß** die Wand des Gehäuses (2) von außen nach innen folgende Schichten umfaßt:
a) einen Druckmantel (25);
b) eine schallabsorbierende Schicht (26);
c) eine elastische Schicht (28);
d) eine von der elastischen Schicht (28) abgestützte verformbare Schale (30) aus verschleißfestem Material.

20. Vorrichtung nach Anspruch 19, **dadurch gekennzeichnet,**
**daß** die schallabsorbierende Schicht (26) aus Sand besteht.

21. Vorrichtung nach Anspruch 19, **dadurch gekennzeichnet, daß** die schallabsorbierende Schicht aus Holz besteht.

22. Vorrichtung nach einem der Ansprüche 19 bis 21, **dadurch gekennzeichnet, daß** die elastische Schicht (28) aus einem Elastomer besteht.

23. Verfahren nach einem der Ansprüche 19 bis 21, **dadurch**
**gekennzeichnet, daß** die elastische Schicht (28) aus einem komprimierten Fluid besteht.

24. Vorrichtung nach einem der Ansprüche 19 bis 23,
**dadurch gekennzeichnet, daß** Temperierkanäle (29) durch die elastische Schicht (28) hindurchgeführt sind.

25. Vorrichtung nach einem der Ansprüche 19 bis 24,
**dadurch gekennzeichnet, daß** die verschleißfeste Schale (30) mit Einrichtungen (31) versehen ist, welche eine elastische Durchmesserveränderung der Schale (30) ermöglichen.

26. Vorrichtung nach einem der Ansprüche 11 bis 25, **dadurch**
**gekennzeichnet, daß** das Wanderbett (16) einen konischen Austragabschnitt (4) und einen oberen zylindrischen Abschnitt (3) des Gehäuses (2) ausfüllt.

27. Vorrichtung nach Anspruch 26, **dadurch gekennzeichnet,**
**daß** die Einrichtung (18) zum Einleiten der Reaktion in der geometrischen Mitte des oberen zylindrischen Abschnittes (3) des Gehäuses (2) angeordnet ist.

## Claims

1. A method for disposing of hazardous or high-energy
materials which ignite at an ignition temperature, in which the materials are caused to undergo a reaction in a pressure-proof housing (2) within a bulk material under controlled conditions, the residual materials of the reaction being non hazardous, and the method comprising the following steps:
a) the bulk material is continuously supplied to an inlet (12) of the housing (2);
b) the materials are loaded into the bulk material;
c) the reaction is initiated;
d) bulk material and the residual material arising from the reaction are discharged from an outlet (7) of the housing (2);
**characterized by** the following steps:
e) the materials and the bulk material are mixed at a temperature which lies below the ignition temperature;
f) the bulk material and the residual material are continuously discharged from the outlet (7) of the housing (2) at a rate equal to the supply rate, so that in dynamic equilibrium between supply and discharge a moving bed (16) is formed which moves within the housing (2) towards the outlet (7);
g) the materials and the bulk material are conveyed towards the outlet (7) of the housing (2) as a common moving bed (16);
h) the reaction of the material inside the moving bed (16) being initiated once by moving of the moving bed the material has arrived at a location having a certain distance from the surface of the moving bed facing the inlet.

2. A method according to claim 1, **characterized in that** balls are used as bulk material.

3. A method according to claim 2, **characterized in that** the balls consist of steel.

4. A method according to claim 2, **characterized in that** the balls consist of ceramic.

5. A method according to one of the preceding claims,
**characterized in that** the reaction is initiated by external heat input.

6. A method according to claim 5, **characterized in that**
the external heat input takes place by means of lost ignition aids.

7. A method according to claim 5, **characterized in that**
the external heat input takes place by means of an arc.

8. A method according to claim 5, **characterized in that**
the bulk material is electrically conductive and the heat input takes place inductively.

9. A method according to one of the preceding claims,
**characterized in that** the bulk material is separated out of the material mixture leaving the moving bed (16) and is supplied again at least in part to the inlet of the housing (2).

10. A method according to one of the preceding claims,
**characterized in that** auxiliaries, in particular fuels, air, temperature control gas, chemicals, chemisorption agents, are supplied to the moving bed.

11. Apparatus for disposing of hazardous or high energy materials, comprising
a) a pressure proof housing (2) in which the materials are caused to undergo a reaction under controlled conditions, the residual materials of the reaction being non hazardous, the housing (2) comprising:
b) a first inlet (12) for supplying bulk material, a second inlet (14) for supplying the materials and an outlet (7) for discharging bulk material and residual materials arising from the reaction;
c) means (21,35) for continuously supplying bulk material to the first inlet (12) ;
d) means (18) for initiating the reaction;
e) means (7) for discharging a mixture of bulk material and residual materials;
**characterized in that**
f) the apparatus comprises a moving bed (16) moving to the outlet (7) and provided by the means for supplying the bulk material (21, 35) and the means (7) for discharging the mixture of bulk material and the residual materials arising from the reaction being formed so as to cause a dynamic equilibrium between the supply of the bulk material and the materials to be disposed on the one hand and the discharge of the mixture of the bulk material and the residual materials arising from the reaction on the other hand;
g) the means (18) for initiating the reaction is arranged beneath the surface of the moving bed (16).

12. Apparatus according to claim 11, **characterized in**
**that** an ignition device (18) is provided beneath the surface of the moving bed (16).

13. Apparatus according to claim 12, **characterized in**
**that** the ignition device (18) incoperates electrodes between which an arc may be generated.

14. Apparatus accordng to claim 12, **characterized in that**
the ignition device (18) incorporates an induction coil with which the moving bed (16) may be heated inductively.

15. Apparatus according to claim 11, **characterized in**
**that** a cooling device is provided with which the temperature profile in the moving bed (16) is adjustable in flow direction.

16. Apparatus according to one of the claims 11 to 15,
**characterized in that** the apparatus comprises a bulk material seperation device (20) to which the material mixture leaving the moving bed (16) is suppliable and which separates the bulk material from the latter, wherein the bulk material outlet of the bulk material separation device (20) is connected to the bulk material inlet (12) of the housing (2).

17. Apparatus according to one of the claims 11 to 16,
**characterized in that** the housing (2) comprises at least one additional inlet opening (11, 13, 15) for the supply of auxiliaries, in particular of fuels, air, temperature control gas, chemicals, chemisorption agents.

18. Apparatus according to one of the claims 11 to 17,
**characterized in that** a suction device is provided which keeps the interior of the housing (2) under vacuum.

19. Apparatus according to one of the claims 11 to 18,
**characterized in that** the wall of the housing (2) comprises the following layers from the outside to the inside:
a) a pressure jacket (25);
b) a sound-absorbent layer (26);
c) an elastic layer (28);
d) a deformable shell (30) of wear resistant material supported by the elastic layer (28).

20. Apparatus according to claim 19, **characterized in that** the sound-absorbent layer (26) consists of sand.

21. Apparatus according to claim 19, **characterized in**
**that** the sound-absorbent layer consists of wood.

22. Apparatus according to one of the claims 19 to 21,
**characterized in that** the elastic layer (28) consists of an elastomer.

23. Apparatus according to one of the claims 19 to 21,
**characterized in that** the elastic layer (28) consists of a compressed fluid.

24. Apparatus according to one of the claims 19 to 23,
**characterized in that** temperature control channels (29) are passed through the elastic layer (28).

25. Apparatus according to one of the claims 19 to 24,
**characterized in that** the wear-resistant shell (30) is provided with devices (31) which permit an elastic change in diameter of the shell (30).

26. Apparatus according to one of the claims 11 to 25,
**characterized in that** the moving bed (16) fills a conical discharge section (4) and an upper cylindrical section (3) of the housing (2).

27. Apparatus according to claim 26, **characterized in**
**that** the device (18) for initiating the reaction is arranged at the geometrical center of the upper cylindrical section (3) of the housing (2).

## Revendications

1. Procédé pour éliminer des matières dangereuses ou hautement énergétiques, s'enflammant à l'atteinte d'une température d'inflammation, selon lequel ces matières sont, dans un carter (2) résistant à la pression, amenées sous des conditions contrôlées, dans un produit en vrac, à une réaction dont les substances résiduelles sont inoffensives, comprenant les étapes suivantes :
a) alimentation en continu de produit en vrac à une admission (12) du carter (2) ;
b) introduction des matières dans le produit en vrac ;
c) déclenchement de la réaction ;
d) déchargement, par une évacuation (7) du carter (2), du produit en vrac et des substances résiduelles obtenues lors de la réaction ;
**caractérisé par** les étapes suivantes :
e) mélangeage des matières avec le produit en vrac à une température inférieure à la température d'inflammation ;
f) déchargement en continu du produit en vrac et des substances résiduelles par l'évacuation (7) du carter (2) dans la même mesure que l'alimentation, de telle sorte qu'on obtient, en équilibre dynamique entre l'alimentation et le déchargement, un lit mobile (16) qui se déplace dans le carter (2) en direction de l'évacuation (7) ;
g) transport des matières et du produit en vrac en direction de l'évacuation (7) du carter (2) sous forme de lit mobile (16) commun ;
h) le déclenchement de la réaction du matériau à l'intérieur du lit mobile (16) ayant lieu une fois que le matériau, par le déplacement du lit mobile (16), a atteint un point qui se trouve à une certaine distance de la surface côté admission du lit mobile (16).

2. Procédé selon la revendication 1, **caractérisé en ce qu'**on utilise comme produit en vrac des billes.

3. Procédé selon la revendication 2, **caractérisé en ce que** les billes sont en acier.

4. Procédé selon la revendication 2, **caractérisé en ce que** les billes sont en matériau céramique.

5. Procédé selon l'une des revendications précédentes, **caractérisé en ce que** la réaction est déclenchée par apport externe de chaleur.

6. Procédé selon la revendication 5, **caractérisé en ce que** l'apport externe de chaleur s'effectue par des aides perdues à l'inflammation.

7. Procédé selon la revendication 5, **caractérisé en ce que** l'apport externe de chaleur s'effectue par un arc électrique.

8. Procédé selon la revendication 5, **caractérisé en ce que** le produit en vrac est électriquement conducteur et l'apport de chaleur s'effectue par induction.

9. Procédé selon l'une des revendications précédentes, **caractérisé en ce que** le produit en vrac est séparé du mélange de matériau quittant le lit mobile (16) et ramené au moins pour partie à l'entrée du carter (2).

10. Procédé selon l'une des revendications précédentes, **caractérisé en ce qu'**on apporte au lit mobile des substances auxiliaires, notamment des combustibles, de l'air, du gaz d'équilibrage de température, des produits chimiques, des agents de chimisorption.

11. Dispositif pour éliminer des matières dangereuses ou hautement énergétiques, comprenant
a) un carter (2) résistant à la pression, dans lequel les matières peuvent être amenées sous des conditions contrôlées à une réaction dont les substances résiduelles sont inoffensives et qui présente
b) une première admission (12) pour l'alimentation de produit en vrac, une deuxième admission (14) pour l'alimentation des matières, et une évacuation (7) pour le déchargement du produit en vrac et des substances résiduelles produites par la réaction,
c) des moyens (21, 35) pour l'alimentation en continu de produit en vrac à la première admission (12) ;
d) un équipement (18) pour déclencher la réaction ;
e) des moyens (7) pour le déchargement d'un mélange de produit en vrac et de substances résiduelles ;
**caractérisé en ce que**
f) il comprend un lit mobile (16) se déplaçant en direction de l'évacuation (7), qui est obtenu par le fait que les moyens (21, 35) pour l'alimentation du produit en vrac et les moyens pour le déchargement du mélange de produit en vrac et de substances résiduelles obtenues lors de la réaction sont conçus de telle sorte qu'on obtient un équilibre dynamique entre l'alimentation du produit en vrac et des matières à éliminer d'une part, et le déchargement du mélange de produit en vrac et de substances résiduelles obtenues lors de la réaction d'autre part ;
g) l'équipement (18) pour déclencher la réaction est disposé au-dessous de la surface du lit mobile (16).

12. Dispositif selon la revendication 11, **caractérisé en ce qu'**un dispositif d'inflammation (18) est prévu au-dessous de la surface du lit mobile (16).

13. Dispositif selon la revendication 12, **caractérisé en ce que** le dispositif d'inflammation (18) comprend des électrodes entre lesquelles peut être produit un arc électrique.

14. Dispositif selon la revendication 12, **caractérisé en ce que** le dispositif d'inflammation (18) comprend une bobine d'induction avec laquelle le lit mobile (16) peut être chauffé par induction.

15. Dispositif selon la revendication 11, **caractérisé en ce qu'**il est prévu un équipement de refroidissement qui permet de régler le profil de température dans la direction d'écoulement dans le lit mobile (16).

16. Dispositif selon l'une des revendications 11 à 15, **caractérisé en ce qu'**il comprend un équipement (20) de séparation de produit en vrac, auquel peut être apporté le mélange de matériau quittant le lit mobile (16) et qui sépare le produit en vrac de ce mélange, la sortie de produit en vrac de cet équipement (20) de séparation de produit en vrac étant reliée à l'admission (12) de produit en vrac du carter (2).

17. Dispositif selon l'une des revendications 11 à 16, **caractérisé en ce que** le carter (2) présente au moins une ouverture d'admission supplémentaire (11, 13, 15) pour l'alimentation de substances auxiliaires, notamment de combustibles, d'air, de gaz d'équilibrage de température, de produits chimiques, d'agents de chimisorption.

18. Dispositif selon l'une des revendications 11 à 17, **caractérisé en ce qu'**il est prévu un équipement d'aspiration qui maintient sous dépression l'intérieur du carter (2).

19. Dispositif selon l'une des revendications 11 à 18, **caractérisé en ce que** la paroi du carter (2) comprend, de l'extérieur vers l'intérieur, les couches suivantes :
a) une enveloppe (25) résistante à la pression ;
b) une couche insonorisante (26) ;
c) une couche élastique (28) ;
d) une coque déformable (30) en matériau résistant à l'usure, soutenue par la couche élastique (28).

20. Dispositif selon la revendication 19, **caractérisé en ce que** la couche insonorisante (26) est constituée de sable.

21. Dispositif selon la revendication 19, **caractérisé en ce que** la couche insonorisante est constituée de bois.

22. Dispositif selon l'une des revendications 19 à 21, **caractérisé en ce que** la couche élastique (28) est constituée d'un élastomère.

23. Dispositif selon l'une des revendications 19 à 21, **caractérisé en ce que** la couche élastique (28) est constituée d'un fluide comprimé.

24. Dispositif selon l'une des revendications 19 à 23, **caractérisé en ce qu'**on fait passer des canaux (29) d'équilibrage de température à travers la couche élastique (28).

25. Dispositif selon l'une des revendications 19 à 24, **caractérisé en ce que** la coque (30) résistante à l'usure est pourvue de moyens (31) qui permettent une modification élastique du diamètre de la coque (30).

26. Dispositif selon l'une des revendications 11 à 25, **caractérisé en ce que** le lit mobile (16) remplit une partie de déchargement conique (4) et une partie supérieure cylindrique (3) du carter (2).

27. Dispositif selon la revendication 26, **caractérisé en ce que** l'équipement (18) pour déclencher la réaction est disposé au centre géométrique de la partie supérieure cylindrique (3) du carter (2).
